# EUROPEAN PATENT SPECIFICATION

(11) **EP 2 390 539 B1**
(45) Date of publication and mention of the grant of the patent: **01.03.2017**
(21) Application number: 11004096.1
(22) Date of filing: 18.05.2011
(51) Int. Cl.: F16K 3/24, B01D 46/00, B01D 46/42

(54) **CLEANING SYSTEM FOR DEDUSTER**
REINIGUNGSSYSTEM FÜR ENTSTAUBER
SYSTÈME DE NETTOYAGE POUR DÉPOUSSIÉREURS

(30) Priority: 27.05.2010 IT MI20100946
(43) Date of publication of application: 30.11.2011
(73) Proprietor: Schenetti, Mario, 41049 Sassuolo (IT)
(72) Inventor: Messina, Aurelio, 20095 Cusano Milanino (MI) (IT)
(74) Representative: Brunacci, Marco

(56) References cited:
- EP-A1- 0 651 187
- EP-A1- 1 649 918
- EP-A2- 1 085 244
- WO-A1-01/29465
- WO-A1-93/01433
- US-A1- 2005 120 881

## Description

Subject of the present invention is a system for cleaning dedusting filters, in particular bag filters or similar.

Such a system comprising the features defined in the preamble of claim 1 is known for instance from document WO-A-01/29465.

For dedusting gases of different kinds, like for example, air, filters of different kind are commonly used, which can have different structures like cloth, felt, or other porous structure. As known, they are made passed by the gas flow to be cleaned, by applying a suitable pressure difference between upstream and downstream of the filter. It is evident that it becomes necessary to periodically provide for a cleaning of the filter, in order to permit an adequate gas flow rate with acceptable load losses. A commonly adopted system for different kinds of filters, in particular for bag or cartridge filters, with the external side of which the inlet of the gas to be dedusted is connected and which the internal side of which, generally through an open end of the filter, the suction of the cleaned gas is connected, is the scavenge air by means of high gas flow rates, made flow concurrently in very short times. This generally occurs through an ejector pipe feeding jets of compressed air to venturis suitably placed at the outlet end of the bags. The pressure wave generated inside the bag deforms it by causing the detachment and the fall of the dust onto the bottom of the dedusting apparatus, where it is collected in order to be discharged. Commonly the bags are placed with their axes mutually parallel mainly in vertical. They are organized in a plurality of parallel rows, for every row being provided an ejector pipe, with a plurality of holes or outlet nozzles, one for each bag.

The ejector pipes are connected with a tank of compressed gas, through a valve which controls the inlet of the gas in the pipe. The valves are placed in holes made in the wall of the tank, generally along a generatrix of the cylindrical wall of this latter; the ejector pipes, or pipes connected with them, being mutually parallel and crossing the tank starting from a hole opposed to that of the valve, in order to be connected with it.

An high gas flow rate having to be generated in the pipe in a very short time for generating pressure waves in all bags of one row, the valve must be able to open and close a clear opening the section of which is similar to that of the ejector pipe, in a time which can be smaller than a tenth of a second. Normally membrane valves of known kind are used, the structure of which imposes to the valve body an outer diameter remarkably higher than that of the pipe. In fact, in order to permit to the gas to have access to the end of the pipe, the diameter of the membrane must exceed that of the pipe, in order to create a passage around it when it is deformed when raised.

For reasons of mechanical resistance, the trend is to manufacture bags with an increasingly smaller diameter and with a greater length. This entails that the pitch among the rows, and consequently among the valves must be reduced, in order to avoid the creation of unused volumes in the dedusting apparatus. For certain diameters of the pipes used, the encumbrance of the valves makes it impossible to reduce the pitch to the desired levels, unless designing offset positions of the valves by artifices of different kind, which however increase the volume and the complexity of the plant.

Furthermore, the membrane valves, especially those with membranes of great diameter, are not completely satisfactory concerning their rapidity of closing, in such phase permitting flows of compressed gas useless for the cleaning of the bags by increasing the energy consumption.

The membranes are further subjected to great stresses, sometimes associated with high temperatures of the gas for process needs, requiring the use of costly materials and frequent substitutions.

Piston valves have been proposed, e.g. in document EP 1 649 918, in which the piston closes the end of the pipe, against which it is pushed by the pressure present in the tank, generated in a chamber delimited between the piston and the wall of in which it is housed the cylindrical body in which it is housed through equalizing holes made in the wall or in the piston itself. The depressurization of the chamber, caused for example when opening a pilot valve causes the removal of the piston, with a rapid opening of the passage area for the gas. The closing of the pilot valve permits the return of the piston by virtue of the gas pressure in the tank, with a mechanism similar to what occurs in the membrane valves.

The proposed solution is still unsatisfactory for various reasons. A precise positioning of the pipe with respect to the valve body is needed, which is difficult when considering that welded, they are fixed, in general to the tank at holes provided in the wall from opposed parts. This results in a not completely adequate tightness, which limits the possibility of using high pressures, as well in a non uniform stress of the piston, with an early damage. Furthermore, the precision required in the working steps and the fixing by welding considerably increase the costs and the construction times, also making the maintenance and the change of components complex.

The aforementioned problems have now been solved thanks to a system for cleaning dedusting filters, as defined in claim 1.

Preferred embodiments are defined in the dependent claims.

Description is now made, in an exemplary way, of a preferred but not exclusive embodiment, schematized in the annexed figures, in which:
figure 1 is a schematic representation of a part onf a cleaning system according to the present invention;
figure 2 is a schematic exploded representation of a valve according to the present invention;
figure 3 is a schematic perspective and sectioned representation of the piston of a valve according to the present invention;
figure 4 is a schematic representation of a part of a cleaning system according to a different aspect of the present invention.

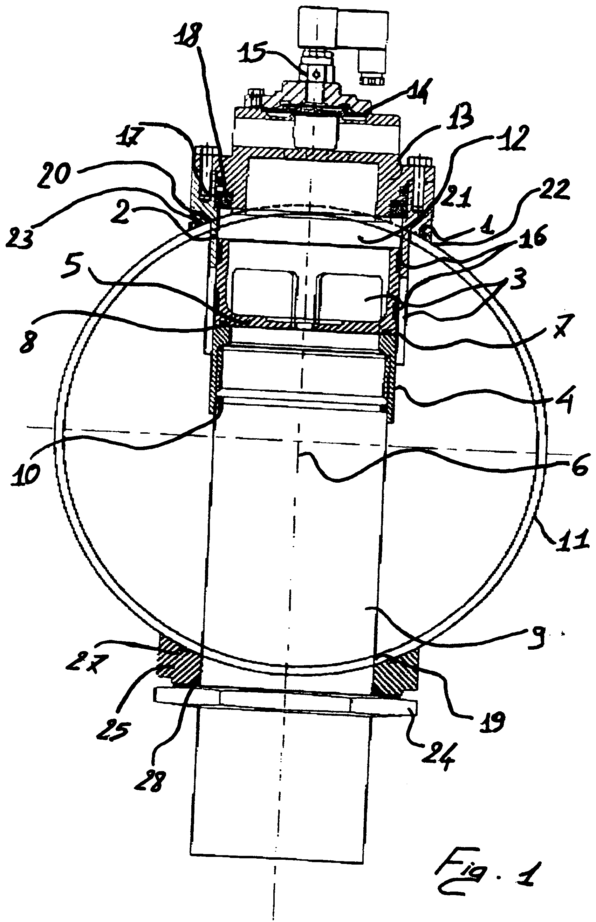

With reference to the figures, the hollow body 1 has the side wall 2 with the windows 3 making said passage for the gas. Inside the hollow body the piston 5 is housed, free to slide along the longitudinal axis 6 of the hollow body. The hollow body has a portion 4 defining a ring-shaped sealing surface 7. As can be seen from figure 1, the surface is such to stop the stroke of the piston in the direction towards the portion 4 and to realize a sealing condition if the piston is suitably pressed against it. To such end, a gasket 8 can be provided, fixed to a piston or to the sealing surface in a suitable way, and if appropriate, housed in an appropriate seat. The gasket can be made of a suitable material, also considering the operation temperature of the plant, for example of Teflon or nylon. The portion 4 is able to sealingly fix itself with a pipe 9, for example being suitably threaded in order to engage with a thread provided on the pipe itself as shown in the figure.

The sealing can be realized in a known way, for example with an O-ring 10 suitably positioned on the pipe. The valve and the pipe being mounted, as shown, on the tank Il, the tightness between the piston and the sealing surface 7 insulates the inside of the tank from the inside of the pipe, so closed by the piston itself. Between the piston and the hollow body a chamber 12 is defined, closed in a suitable way for example by the cover 13 of the valve. The chamber 12 has variable dimensions. On the piston the pressure difference acts between the chamber and the inside of the pipe, which, if sufficient, keeps the piston pressed against the sealing surface. In order to apply an adequate pressure to the chamber, it can be placed in communication with the inside of the tank for example with equalizing holes provided in the side surfaces of the piston or in the wall of the hollow body in a suitable position. A device is provided for depressurizing the chamber when it is necessary that the piston open the passage to the gas from the tank to the pipe. According to a preferred aspect of the invention, the device can be a membrane pilot valve, which in turn can be piloted by an electromagnetic valve 15, and which can put the chamber in communication with the outside or with another room at low pressure. The greater resistance of the aforementioned equalizing holes to the passage of gas, with respect to the pilot valve, permits a fast pressure drop, when it is open. This kind of device can be completely similar to known devices used for actuating membrane valves or also piston ones of greater dimensions, in order to guarantee great air flow rates in very short times, as those commonly used in the field according to the known art, and therefore, it does not need a more detailed description. The device can advantageously be integrated in the cover 13. When the valve is closed, the piston is sucked rapidly in a closing position also thanks to the equalizing holes, which when the depressurizing device is deactivated, permit to restore the pressure in the chamber.

The equalizing holes can easily be designed in order to give the right resistance for the operation as described before. It is evident that the holes, if desired, can be substituted with a passage having an adequate structure, realized in any suitable way.

If desired, the piston can have guide segments 16 able to guide the piston and to prevent the wear of the walls, of a suitable material, which in case of a piston and of a hollow body made of aluminium, can preferably be teflon or nylon according to the conditions of use. Suitable locators can be provided, for example a ring of a suitable elastic material 18, in order to dampen the impact suffered by the piston in the phase of fast opening.

The valve and the pipe must be sealingly mounted onto the tank, preferably in two opposing holes 19 and 20 provided in the wall of the tank, with an adequate diameter, and this can occur in any suitable way. According to a preferred aspect, the fixing between pipe and hollow body is such, that it permits the transmission of a tension effort, as the threaded coupling, and it is possible to realize the assembly as shown in the figure, which is a preferred aspect of the invention. The valve according to the present invention has a part 21 with a diameter exceeding the diameter of the hole 20 in which it is housed. Such part has a shaped surface 22 corresponding to the shape of the wall of the tank, against which it is able to sealingly rest, for example by means of a gasket 23, or an O-ring; an adequate seat can be provided for housing such gasket.

According to a preferred aspect, the part 21 is made as a single piece with the hollow body. This embodiment is very simple and permits an easy disassembly and assembly of other components, in particular of the cover 13 with the structures integrated in it and also permitting the access to the piston, with the hollow body mounted onto the tank.

The pipe, inserted in the hole 19, can be provided with a flange 24, preferably welded to it, able to retain the pipe against the wall of the tank and, preferably to facilitate the clamping operation of the pipe by engaging with suitable tools as wrenches; preferably the flange is hexagonal, as shown in figure, in order to permit the operation by means of a normal wrench. By rotating the tube, it is screwed in the hollow body and the shaped surface 2 is pressed against the wall of the tank, so realizing the sealing between it and the valve.

For realizing the sealing between pipe and tank, a ring-shaped insert 25 can be provided, to interpose between flange 24 and wall of the tank, having a shaped surface 26 corresponding to said wall, with a gasket or O-ring 27, and means 28 able to be sealingly tightened between insert and pipe, as for example a gasket housed in a conical seat provided around the aperture for the pipe. It can be seen how the assembly of the system is in such case very easy and the use of welding can be avoided in this phase, which makes it also possible to completely remove the valve and pipe in an analogous way to the assembly, so simplifying the maintenance operations.

Even if the represented solution is preferred, variations can be realized without going beyond the scope of the invention. For example, a hollow body could be realized in order to cross the whole tank and protrude from it through the hole 19. The flange 24 could be substituted, in such case, with a nut movable on an appropriate external thread of the hollow body. The connection between hollow body and pipe would so occur at the outside of the tank instead of at the inside.

The threaded connection between pipe and hollow body could also provide, as opposed to which explained, for the external thread on the hollow body and the internal one on the pipe.

The various components can be realized with any suitable material and with adequate techniques. For example the hollow body can be made of aluminium, which can be anodized in order to improve the corrosion and wear resistance, and realized by pressure die casting, with a great precision of shape. It can be seen from the figures how, in the represented shape it is possible to realize it in a die made of two half dies approaching one another along the longitudinal axis 6, and each of them has no undercuts, so permitting an economic production. Also the piston can be made of pressure die cast aluminium. By realizing it with the same material of the hollow body, problems can be avoided due to the different material resistance, considering that the closing of the piston against the sealing surface occurs with a remarkable speed.

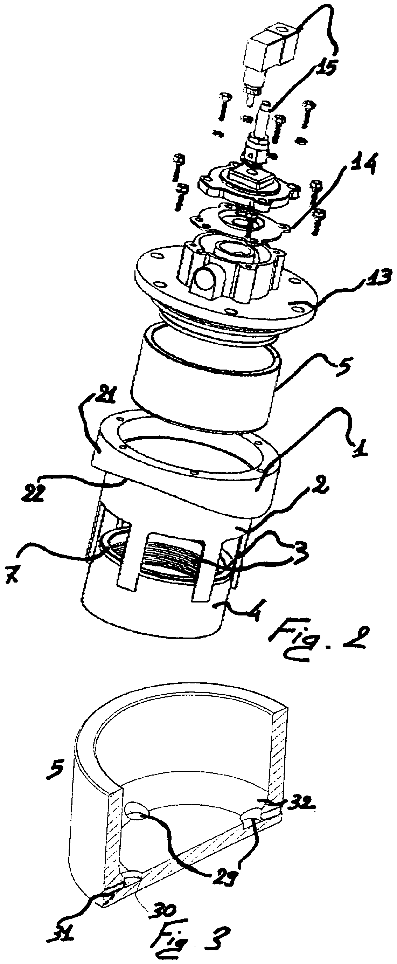

In figure 3 a possible embodiment is shown of the piston 8 with the equalizing holes 29. The piston can be hollow and realized by pressure die casting with the cavities 30 already formed. Then the holes 31 can be made in order to reach the cavities 30 in order to avoid an interference with the fitting 32 between the bottom and the lateral wall of the piston. According to a possible embodiment, the holes are positioned towards the lower end of the piston in order to be always facing the windows 3 and exposed to a region where the pressure is always sufficiently high to permit a prompt return of the piston after the opening phase.

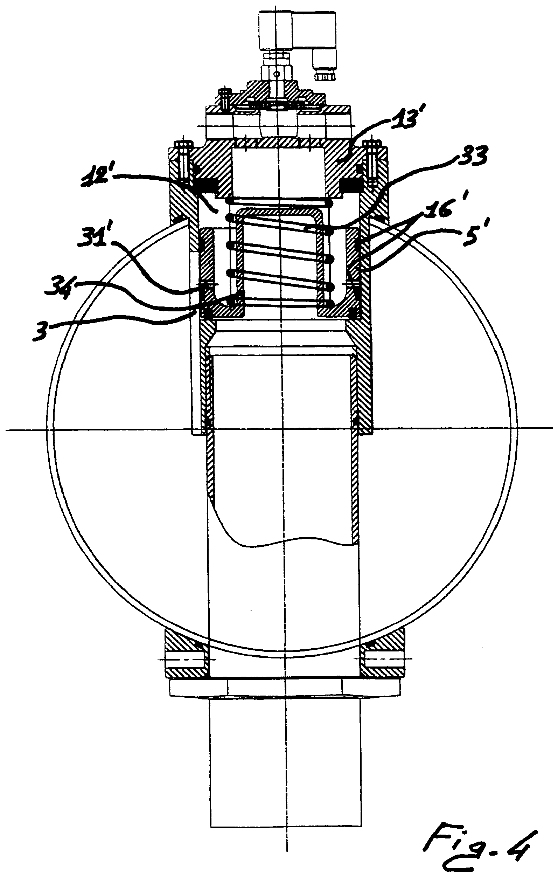

In figure 4 some solutions are represented different from those of figure 1, which solutions can be adopted both in combination and mutually independently. According to this embodiment, the holes 31' are no more positioned towards the end of the piston, but more centrally on the lateral wall and, as a consequence, they are centred between the two guide segments 16'; this permits to position the segments, in particular the one towards the sealing surface, nearer to the ends of the piston and farther among them, in order to realize a more precise guide for the piston. Obviously, at the design stage care will be taken in order that the holes be always adequately facing the inside of the tank, for example through the windows 3, as seen before.

According to a further aspect of the invention, although the movement of the piston and the tightness between it and the sealing surface is preferably always entrusted to the pressure differences, which are formed as previously described, between the piston and the fixed part of the valve, in particular between the piston and the cover 13', the return spring 33 can be interposed, able to assist the return of the piston in a closing position, and in particular in order to avoid possible jams, for example due to adhesion between the parts. In presence of the spring suitable means can be provided in order to keep it in position; for example, the piston can have the cylindrical recess 34 around which the spring must be positioned and made at the bottom of the piston. Such recess, or other solutions as bosses, septa or different shapes of the piston or of other parts of the valve, can be also adopted both in presence and in absence of the spring, in order to reduce the volume of the chamber 12' and make the depressurization and the return of the pressure at its inside faster.

The holes, the structure of the piston and of the various components can be designed by an expert in the field following the needs of flow rate and opening and closing speed. For example, the equalizing holes can have a diameter of about 5 mm for four holes, the windows 3 and the stroke of the piston being such as to permit a passage way of the gas similar to the internal section of the pipe.

It has been found that the valve according to the present invention guarantees a fast opening and closing even in short times, for example of around 30 ms, with a fast closing in order to generate an abrupt interruption of the gas flow starting from the maximum flow rate, which reduces the energy wastes, the more significant the more the pressure is high, which is desirable in order to provide for adequate scavenging flow rates in plants with many bags for each row. Furthermore, the valve has a good mechanical resistance if used at high pressures, for example around 8 bar and at temperatures even after 200°C. It has been especially possible to reduce the diameter of the valve in order to reduce the pitch between the ejector pipes, without creating dead volumes in the deduster or without increasing the structural complexity of the plant, even in the case of bags or cartridges having a diameter lower than 150 mm, with ejector pipes having a diameter starting from 100 mm and more, which situation generally impaired the use of membrane valves, unless with particular structural provisions.

As said, the gas to which reference is made can be air, but also any other kind of gas, according to the needs.

The present invention also relates to a deduster having bags or cartridge and provided with the system described before.

## Claims

1. System for cleaning dedusting filters, in particular of the bag or cartridge type, comprising:
- a compressed-gas tank (11);
- at least one gas shut-off valve sealingly inserted inside a first hole (20) formed in the wall of said tank (11) and comprising a hollow body (1) with at least one side wall, said wall having at least one passage (3) for the gas, a valve element (5) slidable inside said hollow body and defining with said wall a chamber having variable dimensions, and a device (14,15) for depressurising said chamber;
- at least one pipe (9) sealingly inserted inside a second hole (19) formed in the wall of said tank (11) and sealingly fixed to said hollow body (1), said pipe (9) being able to convey the compressed gas to said bags or cartridges;
- wherein said hollow body (1) is sealingly fixed to the end of said pipe (9) and comprises a sealing surface (7) adapted to stop said valve element (5) in one direction and form a gas-tight closure when cooperating therewith;
- wherein said hollow body (1) has a threaded portion coupled with a threaded end of said pipe (9) and a part (21) integral with said hollow body (1) and having a diameter greater than said first hole, with a shaped surface (22) capable of forming a seal against the wall of said tank,
- and wherein said pipe (9) has a flange (24) adapted to retain it against the wall of said tank at said second hole (19); **characterized in that** said valve element is a piston (5) made of aluminium, and **in that** said hollow body (1) comprises at least one locator (18) made of elastic material, in order to dampen the impact suffered by the piston (5) in a phase of fast opening.

2. System according to claim 1, wherein said sealing surface is formed in a single piece with said hollow body.

3. System according to any one of the preceding claims, wherein at least said hollow body (1) is made by means of die-casting, optionally of aluminium.

4. System according to any one of the preceding claims, wherein said depressurisation device comprises a diaphragm pilot valve (14).

5. System according to claim 4, wherein said pilot valve is controlled by an electromagnetic valve (15).

6. System according to any one of the preceding claims, wherein an annular insert (25) is arranged between said flange and the wall of the tank, said insert having a shaped surface (26) capable of forming a seal with said tank wall, and means (28) able to form a seal between insert and pipe upon tightening of the threaded connection between pipe and hollow body.

7. System according to any one of the preceding claims, **characterized in that** said hollow body (1) or said piston (5) comprises at least one equalizing hole (29) in order to place in communication said chamber (12) with the inside of the tank (11).

8. Deduster with bag or cartridge filters, provided with a system according to any one of claims 1 to 7.

## Patentansprüche

1. System zum Reinigen von Staubfiltern, insbesondere in Schlauch- oder Kartuschenbauweise, mit:
- einem Druckgasbehälter (11);
- wenigstens einem Gas-Absperrventil, das in ein in der Wand des Behälters (11) ausgebildetes erstes Loch (20) dichtend eingefügt ist und aufweist einen Hohlkörper (1) mit wenigstens einer Seitenwand, wobei die Wand wenigstens einen Durchgang (3) für das Gas hat, ein Ventilelement (5), das in dem Hohlkörper gleitfähig ist und mit der Wand eine Kammer bildet, die variable Abmessungen hat, und eine Einrichtung (14, 15) zum Entspannen der Kammer;
- wenigstens einem Rohr (9), das in einem in der Wand des Behälters (11) ausgebildeten zweiten Loch (19) dichtend eingefügt ist und an dem Hohlkörper (1) dichtend befestigt ist, wobei das Rohr (9) in der Lage ist, das Druckgas zu den Schläuchen oder Kartuschen zu führen;
- wobei der Hohlkörper (1) an dem Ende des Rohrs (9) dichtend befestigt ist und eine Dichtfläche (7) aufweist, die so ausgebildet ist, dass diese das Ventilelement (5) in einer Richtung stoppt und einen gasdichten Verschluss bildet, wenn jene mit diesem zusammenwirkt;
- wobei der Hohlkörper (1) aufweist einen Gewindeabschnitt, der mit einem Gewindeende des Rohrs (9) gekoppelt ist, und einen Teil (21), der mit dem Hohlkörper (1) einstückig ist und einen größeren Durchmesser als das erste Loch aufweist, mit einer gestalteten Oberfläche (22), die eine Dichtung an der Wand des Behälters bilden kann,
- und wobei das Rohr (9) einen Flansch (24) hat, der so ausgebildet ist, dass dieser jenes an dem zweiten Loch (19) an der Wand des Behälters hält;
**dadurch gekennzeichnet, dass** das Ventilelement ein Kolben (5) aus Aluminium ist, und dass der Hohlkörper (1) wenigstens einen Positionsgeber (18) aus elastischem Material aufweist, um einen durch den Kolben (5) in einer Phase eines schnellen Öffnungsvorgangs ausgeübten Stoß zu dämpfen.

2. System nach Anspruch 1, in welchem die Dichtfläche einstückig mit dem Hohlkörper ausgebildet ist.

3. System nach einem der vorhergehenden Ansprüche, in welchem wenigstens der Hohlkörper (1) mittels Spritzgießens optional aus Aluminium hergestellt ist.

4. System nach einem der vorhergehenden Ansprüche, in welchem die Entspannungseinrichtung ein Membran-Steuerventil (14) umfasst.

5. System nach Anspruch 4, in welchem das Steuerventil durch ein Elektromagnetventil (15) gesteuert wird.

6. System nach einem der vorhergehenden Ansprüche, in welchem ein Ringeinsatz (25) zwischen dem Flansch und der Wand des Behälters angeordnet ist, wobei der Einsatz aufweist eine gestaltete Oberfläche (26), die eine Dichtung mit der Behälterwand bilden kann, und Mittel (28), die in der Lage sind, eine Dichtung zwischen dem Einsatz und dem Rohr zu bilden, wenn die Schraubverbindung zwischen dem Rohr und dem Hohlkörper angezogen wird.

7. System nach einem der vorhergehenden Ansprüche, **dadurch gekennzeichnet, dass** der Hohlkörper (1) oder der Kolben (5) wenigstens ein Ausgleichsloch (29) aufweist, um die Kammer (12) mit dem Inneren des Behälters (11) in Kommunikation zu bringen.

8. Entstauber mit Schlauch- oder Kartuschenfiltern, versehen mit einem System nach einem der Ansprüche 1 bis 7.

## Revendications

1. Système de nettoyage pour filtres de dépoussiérage, notamment du type sac ou cartouche, comprenant :
- un réservoir de gaz comprimé (11) ;
- au moins une soupape d'arrêt de gaz insérée de manière étanche dans un premier trou (20) formé dans la paroi dudit réservoir (11) et comprenant un corps creux (1) avec au moins une paroi latérale, ladite paroi possédant au moins un passage (3) pour le gaz, un élément de valve (5) apte à coulisser dans ledit corps creux et définissant, avec ladite paroi, une chambre ayant des dimensions variables, et un dispositif (14, 15) pour dépressuriser ladite chambre ;
- au moins une conduite (9) insérée de manière étanche dans un second trou (19) formé dans la paroi dudit réservoir (11) et fixée de manière étanche audit corps creux (1), ladite conduite (9) étant apte à acheminer le gaz comprimé auxdits sacs ou cartouches ;
- dans lequel ledit corps creux (1) est fixé de manière étanche à l'extrémité de ladite conduite (9) et comprend une surface d'étanchéité (7) apte à arrêter ledit élément de valve (5) dans une direction et former une fermeture étanche aux gaz lorsqu'elle coopère avec celui-ci ;
- dans lequel ledit corps creux (1) présente une portion filetée couplée à une extrémité filetée de ladite conduite (9) et une partie (21) solidaire dudit corps creux (1) et ayant un diamètre supérieur à celui dudit premier trou, avec une surface (22) conformée de façon à former une étanchéité contre la paroi dudit réservoir,
- et dans lequel ladite conduite (9) comporte une bride (24) apte à la retenir contre la paroi dudit réservoir au niveau dudit second trou (19) ; **caractérisé en ce que** ledit élément de valve est un piston (5) réalisé en aluminium, et **en ce que** ledit corps creux (1) comprend au moins un localisateur (18) réalisé en matériau élastique, afin d'amortir l'impact subi par le piston (5) dans une phase d'ouverture rapide.

2. Système selon la revendication 1, dans lequel ladite surface d'étanchéité est formée en une seule pièce avec ledit corps creux.

3. Système selon l'une quelconque des revendications précédentes, dans lequel au moins ledit corps creux (1) est réalisé par moulage sous pression, éventuellement d'aluminium.

4. Système selon l'une quelconque des revendications précédentes, dans lequel ledit dispositif de dépressurisation comprend une vanne de pilotage à diaphragme (14).

5. Système selon la revendication 4, dans lequel ladite vanne pilote est commandée par une vanne électromagnétique (15).

6. Système selon l'une quelconque des revendications précédentes, dans lequel un insert annulaire (25) est agencé entre ladite bride et la paroi du réservoir, ledit insert ayant une surface conformée (26) de façon à former une étanchéité avec ladite paroi du réservoir, et des moyens (28) aptes à former une étanchéité entre insert et conduite lors du serrage du raccordement fileté entre conduite et corps creux.

7. Système selon l'une quelconque des revendications précédentes, **caractérisé en ce que** ledit corps creux (1) ou ledit piston (5) comprend au moins un orifice d'égalisation (29) afin de mettre en communication ladite chambre (12) avec l'intérieur du réservoir (11).

8. Dépoussiéreur avec des filtres à sac ou à cartouche, pourvu d'un système selon l'une quelconque des revendications 1 à 7.
